# EUROPÄISCHE PATENTSCHRIFT

(11) **EP 1 658 765 B1**
(45) Veröffentlichungstag und Bekanntmachung des Hinweises auf die Patenterteilung: **09.04.2008**
(21) Anmeldenummer: 05019506.4
(22) Anmeldetag: 08.09.2005
(51) Int. Cl.: A01D 41/127

(54) **Landwirtschaftliche Arbeitsmaschine mit einem Antriebsmotor**
Agricultural machine with a drive motor
Machine de travail agricole avec un moteur d'entraînement

(30) Priorität: 22.11.2004 DE 102004056233
(43) Veröffentlichungstag der Anmeldung: 24.05.2006
(73) Patentinhaber: CLAAS Selbstfahrende Erntemaschinen GmbH, 33428 Harsewinkel (DE)
(72) Erfinder: Hugenroth, Ludger, 48346 Ostbevern (DE); Grosse-Hündfeld, Max, 48155 Münster (DE)

(56) Entgegenhaltungen:
- EP-A- 0 950 346
- EP-A- 1 609 349

## Beschreibung

Die Erfindung betrifft eine landwirtschaftlichen Arbeitsmaschine mit einem Antriebsmotor gemäß dem Oberbegriff des Anspruchs 1. EP-A-1 609 349 offenbart eine derartige Arbeitsmaschine und gehört gemäss Art 54(3) EPÜ zum Stand der Technik.

In der EP 0 950 346 A1 wird ein Mähdrescher mit einem Motor sowie einer an dem Motor angeschlossenen Motorsteuerung zur Steuerung der Leistung des Motors offenbart. Von dem Motor werden unter anderem unterschiedliche Vortriebs- und Verarbeitungseinrichtungen angetrieben. Die Motorsteuerung hat die Aufgabe die maximale Leistung des Motors zu reduzieren, wenn die Vortriebseinrichtung und/oder die Verarbeitungseinrichtung abgeschaltet ist. Auf diese Weise wird eine Überlastung durch überschüssige Motorleistung, die bei der Abschaltung einer angetriebenen Einrichtung frei wird, vermieden, was eine kostenintensive Überdimensionierung der einzelnen Antriebsorgane nicht mehr erforderlich macht. Hingegen wird die Leistung des Motors vergrößert, wenn die Vortriebs- und/oder Verarbeitungseinrichtung reaktiviert werden.

Nachteil der in der EP 0 950 346 A1 offenbarten Ausführung ist, dass die Leistung des Antriebsmotors nicht in Abhängigkeit von den spezifischen und tatsächlichen Erntebedingungen reguliert wird, sondern ausschließlich in Abhängigkeit von dem Betriebs- oder Außerbetriebszustandes unterschiedlicher Systeme oder Organe innerhalb des Mähdreschers. Das Problem der Regelung der Drehzahl des Antriebsmotors in Abhängigkeit von erntebedingten Belastungen wird durch die in der EP 0 950 346 A1 offenbarte Ausführung nicht gelöst.

Es ist daher Aufgabe der Erfindung die Nachteile des zitierten Standes der Technik zu vermeiden und einen sicheren Erntebetrieb zu gewährleisten.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem eine einem Antriebsmotor einer landwirtschaftlichen Arbeitsmaschine zugeordnete Steuereinrichtung den Antriebsmotor dann in einem Betriebszustand "Beschleunigung" betreibt, wenn in dem von dem Antriebsmotor angetriebenen System von Arbeitsorganen ein Erntegutdurchsatz ermitteltbar ist, wird sichergestellt, dass der Antriebsmotor im Moment der durchsatzbedingten Abforderung großer Antriebsleistungen bereits in der von hohen Ladedrücken und großer Kraftstoffzufuhr bestimmten Beschleunigungsphase arbeitet, sodass die üblicherweise auftretenden durchsatzbedingten Drehzahlschwankungen der Arbeitsorgane oder das sogenannte Abwürgen des Motors vermieden werden.

In vorteilhafter Weiterbildung der Erfindung definiert der Betriebszustand "Beschleunigung" des Antriebsmotors den Volllastbetrieb des Antriebsmotors, welcher das Beschleunigen des Antriebsmotors von einer Ist-Motordrehzahl zu einer Maximal-Motordrehzahl umfasst. Zugleich definiert das Betreiben des Antriebsmotors mit einer Ist-Motordrehzahl, die nicht der Maximaldrehzahl entspricht, den Betrieb des Antriebsmotors in einem sogenannten Teillastbereich.

Damit die Steuereinrichtung den Antriebsmotor stets in einen definierten und reproduzierbaren Beschleunigungszustand versetzt, ist in vorteilhafter Weiterbildung der Erfindung vorgesehen, dass die Steuereinrichtung eine Drehzahlerhöhung des Antriebsmotors in einem definierten Drehzahlbereich herbeiführt.

Im einfachsten Fall kann die Änderung des Betriebszustandes des Antriebsmotors mittels der Steuereinrichtung dadurch erreicht werden, dass das Betreiben des Antriebsmotors bei lst-Motordrehzahl durch die Steuereinrichtung dann bewirkt wird, wenn in dem von dem Antriebsmotor angetriebenen System von Arbeitsorganen kein Erntegutdurchsatz ermittelt wird.

Damit sichergestellt ist, dass im Moment des größten Antriebsenergiebedarfs des systems von Arbeitsorganen der Antriebsmotor gerade seine Beschleunigungsphase durchlaufen hat und sich in einem Betriebspunkt im Bereich seiner Maximaldrehzahl befindet, wird in einer vorteilhaften Ausgestaltung der Erfindung der Erntegutdurchsatz in dem System von Arbeitsorganen in einem vorderen, die von dem Erntegutdurchsatz zunächst kontaktierten Arbeitsorgane umfassenden Bereich ermittelt.

Im einfachsten Fall kann der Erntegutdurchsatz und/oder ein dem Erntegutdurchsatz adäquates Signal mittels an sich bekannter und technisch ausgereifter Sensoren ermittelt werden. In vorteilhafter Weise könne die Sensoren am Vorsatzgerät und/oder an den Arbeitsaggregaten der landwirtschaftlichen Arbeitsmaschine zur direkten oder indirekten Sensierung des Erntegutstromes angeordnet sein.

Dadurch, dass die Steuereinrichtung die Drehzahl des Antriebsmotors außerhalb des Erntegutbestandes reduziert und die Drehzahl des Antriebsmotors beim Hineinfahren in den Erntegutbestandes erhöht, kann die Erntefahrt ohne Unterbrechung fortgesetzt werden, ohne dass die Fahrtgeschwindigkeit vermindert werden muss. Um eine optimale Auslastung des Antriebsmotors zu erreichen, entspricht die Erhöhung der Drehzahl des Antriebsmotors der vorangegangenen Antriebsmotordrehzahlreduzierung.

Damit der Fahrer der landwirtschaftlichen Arbeitsmaschine die Auslastung des Antriebsmotors den jeweiligen Erntebedingungen anpassen kann, sind die Drehzahlbereiche der Erhöhung und der Reduzierung der Drehzahl des Antriebsmotors einstellbar.

Der Fahrer erfährt zudem eine Entlastung, dadurch, dass die Drehzahlsenkung und die Drehzahlerhöhung des Antriebsmotors von Parametern vorgegeben wird, wobei die Parameter für die Vorgabe der Drehzahl des Antriebsmotors die Drehzahl des Antriebsmotors selbst, die Fahrgeschwindigkeit, die Erntegutart, die Erntegutmenge, die Schnittlänge des Ernteguts, die Schichtdicke des Ernteguts und/oder die Erntegutfeuchte sein können.

Zur weiteren Entlastung des Fahrers erfolgt die Drehzahlsenkung und die Drehzahlerhöhung selbsttätig. Bei sich plötzlich ändernden Erntebedingungen bleibt dem Fahrer zusätzlich die Möglichkeit eine Drehzahländerung manuell herbeizuführen.

Weitere vorteilhafte Ausgestaltungen sind Gegenstand weiterer Unteransprüche und werden nachfolgend anhand von Zeichnungen näher erläutert.

Es zeigen:
- Figur 1: einen selbstfahrenden Feldhäcksler mit einem Vorsatzgerät in Seitenansicht und Schnittdarstellung
- Figur 2: graphische Darstellung typischer Motorbetriebskennlinien

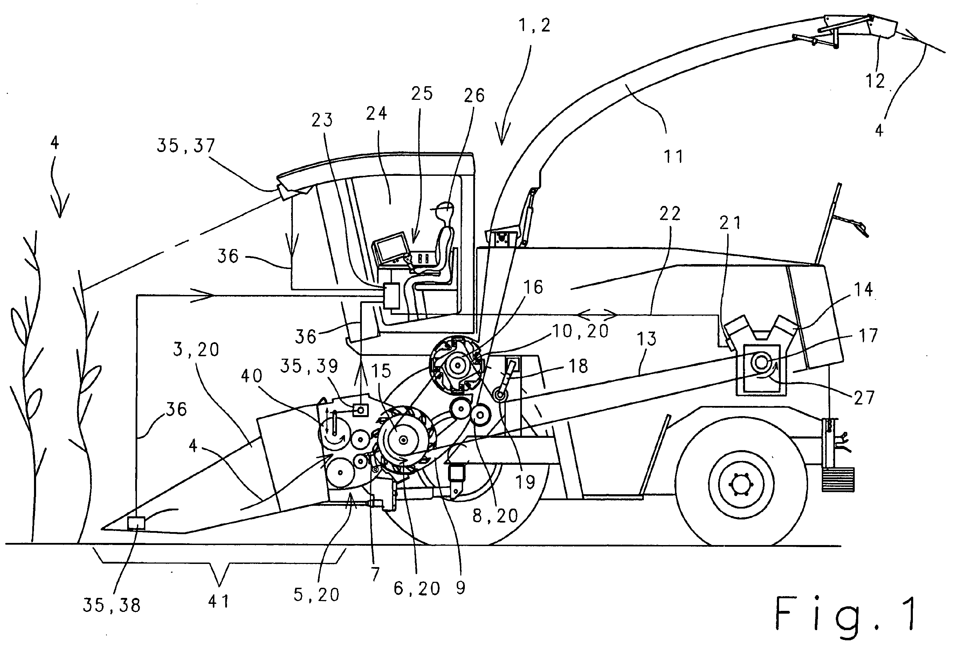

Figur 1 zeigt eine als selbstfahrender Feldhäcksler 1 ausgeführte landwirtschaftliche Arbeitsmaschine 2 in Seitenansicht und Schnittdarstellung. Frontseitig ist dem Feldhäcksler 1 ein Vorsatzgerät 3 zugeordnet, welches im Arbeitsbetrieb des Feldhäckslers 1 das Erntegut 4 aufnimmt, schneidet und es den nachgeordneten Einzugs- und Vorpresswalzen 5 zuführt. Die Einzugs- und Vorpresswalzen 5 leiten das Erntegut 4 der nachgeordneten und rotierenden Häckseltrommel 6 zu, welche das Erntegut 4 an einer Gegenschneide 7 zerkleinert. Das zerkleinerte Erntegut 4 wird sodann an eine Nachzerkleinerungseinrichtung 8 übergeben, die die Erntegutkörner, wie beispielsweise Mais, anschlägt und über einen Förderschacht 9 an einen Nachbeschleuniger 10 übergibt. Der Nachbeschleuniger 10 beschleunigt das zerkleinerte Erntegut 4 und fördert es über einen horizontal und vertikal verstellbaren Auswurfkrümmer 11 und eine diesem verschwenkbar zugeordnete Auswurfkrümmerklappe 12 zur Regelung der Erntegutstrahlweite auf eine nicht abgebildete, dem Auswurfkrümmer 11 zugeordnete Transportvorrichtung.

Im dargestellten Ausführungsbeispiel werden die Häckseltrommel 6 und der Nachbeschleuniger 10 über einen gemeinsamen Antriebsriemen 13 und diesem zugeordnete Riemenscheiben 15, 16 von dem Antriebsmotor 14 angetrieben. Über eine nicht abgebildete und zwischen dem Antriebsmotor 14 und einer dem Antriebsmotor 14 zugeordneten Riemenscheibe 17 positionierte Kupplung kann der Riemenantrieb 13, 15, 16 zu- und abgeschaltet werden. Zur schlupfarmen Übertragung der Antriebsenergie wird der Antriebsriemen 13 dauerhaft von einer Spanneinrichtung 18 über eine Spannrolle 19 vorgespannt. Zudem werden in an sich bekannter und deshalb nicht dargestellter Weise das Vorsatzgerät 3, die der Häckseltrommel 6 vorgeordneten Einzugs- und Vorpresswalzen 5 und die Nachzerkleinerungseinrichtung 8 von dem Antriebsmotor 14 angetrieben. Sowohl das Vorsatzgerät 3 als auch die Einzugs-und Vorpresswalzen 5, die Häckseltrommel 6, die Nachzerkleinerungseinrichtung 8 und der Nachbeschleuniger 10 sowie deren verschiedensten Antriebselemente 13, 15, 16 bilden das erfindungsgemäße System von Arbeitsorgane 20.

Weiter verfügt der Antriebsmotor 14 in an sich bekannter Weise über eine sogenannte elektronische Motorsteuerung 21, die in erfindungsgemäßer und noch näher zu erläuternder Weise über Datenübertragungssysteme 22 mit einer der landwirtschaftlichen Arbeitsmaschine 2 zugeordneten Steuereinrichtung 23 in Wirkverbindung stehen. Die Steuereinrichtung 23 ist zudem mit der in der Fahrzeugkabine 24 angeordneten Eingabe- und Anzeigeeinheit 25 gekoppelt, über die der Betreiber 26 des Feldhäckslers 1 unter anderem die Steuereinrichtung 23 bedienen kann. Die elektronische Motorsteuerung 21 regelt die verschiedenen Betriebszustände des Antriebsmotors 14, wobei hier je nach den berücksichtigten Kriterien, wie etwa Leistungsbedarf oder niedriger Kraftstoffverbrauch, die Betriebszustände "Teillastbereich" und "Volllastbereich" angesteuert werden. Der wesentliche Unterschied zwischen beiden Betriebszuständen liegt darin, dass im "Teillastbereich" das von dem Antriebsmotor 14 aufzubringende Antriebsmoment in der Regel gering ist, sodass die Motorsteuerung 21 einen kraftstoffsparenden Betriebszustand am Antriebsmotor 14 einstellt, der im wesentlichen von niedrigen Motorladedrücken und geringem Kraftstoffbedarf bestimmt wird. Hingegen definiert der "Volllastbereich" die Beschleunigungsphase des Antriebsmotors 14, bei dem sich wegen des zum Teil erheblich ansteigenden Antriebsmomentes neben einem hohen Kraftstoffbedarf auch deutlich höhere Motorladedrücke einstellen. Befindet sich der Antriebsmotor 14 in der Beschleunigungsphase, wirkt sich eine plötzliche Erhöhung des von dem Antriebsmotor 14 bereitzustellenden Antriebsmomentes weniger störend auf Drehzahlschwankungen des Antriebsmotors 14 selbst und der von ihm angetriebenen Arbeitsorgane 20 aus. Hier setzt nun die Erfindung an, die im wesentlichen bezweckt, einen in einem sogenannten Kraftstoffsparmodus arbeitenden Antriebsmotor 14 so frühzeitig in den Betriebszustand "Beschleunigung" zu überführen, dass beispielsweise ein erntegutdurchsatzbedingtes sprunghaftes Ansteigen des von dem Antriebsmotor 14 zu überwindenden Antriebsmomentes weder einen Drehzahlabfall an den Arbeitsorganen 20 noch eine Fahrgeschwindigkeitsreduzierung der landwirtschaftlichen Arbeitsmaschine 2 nach sich zieht.

Gemäß Fig. 1 ist der landwirtschaftlichen Arbeitsmaschine 1 eine elektromotorisch, elektrohydraulisch oder elektronisch arbeitende Steuereinrichtung 23 zugeordnet, die die Antriebsdrehzahl 27 des Antriebsmotors 14 durch Einflussnahme auf die Motorsteuerung 21 ändern kann. Erfindungsgemäß erfolgt diese Änderung der Motordrehzahl 27 in Abhängigkeit von einem in dem von dem Antriebsmotor 14 angetrieben System von Arbeitsorganen 20 der landwirtschaftlichen Arbeitsmaschine 2 sensierten Erntegutdurchsatz 4.

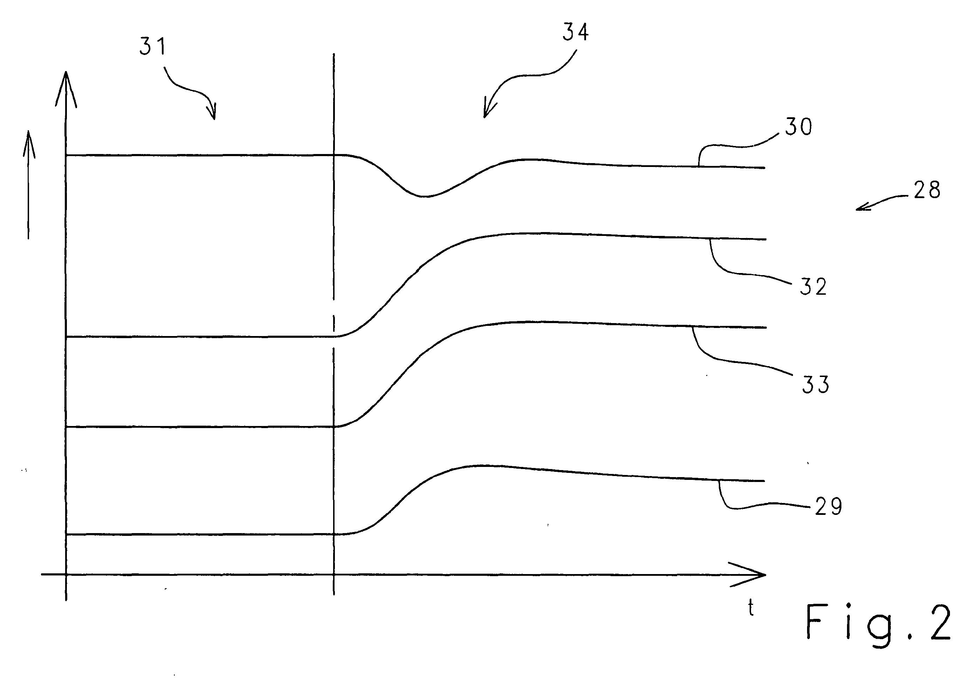

Die Drehzahl des Antriebsmotors 14 wird durch unterschiedliche Parameter bestimmt und beeinflusst. Insbesondere wirken sich Belastungen der Arbeitsaggregate 3, 5, 6, 8, 10, 20 drehzahlsenkend aus. Wird beispielsweise eine große Menge an Erntegut 4 von dem Vorsatzgerät 3 aufgenommen und über die Förder- und Vorpresswalzen 5 der Häckseltrommel 6 zugeführt kann es zu einem schlagartigen Drehzahlabfall kommen, der einen Stillstand des Antriebsmotors 14 und ein Festsetzen der Häckseltrommel 6 zur Folge haben kann. Dies hat wiederum zur Konsequenz, dass der Fahrer des Feldhäckslers 1 in einem zeitintensiven Verfahren das festgesetzte Erntegut 4 von der Häckseltrommel 6 entfernen muss, um die Erntefahrt fortzuführen. Die Problematik des Festsetzens und des Abwürgens des Antriebsmotors 14 tritt insbesondere bei dem sich ständig wiederholenden Einfahren der landwirtschaftlichen Arbeitsmaschine 2 in den Erntegutbestand auf. Fig. 2 zeigt diese Zusammenhänge anhand typischer Motorkennlinien 28. Üblicher Weise führt ein schneller Anstieg des Erntegutdurchsatzes 29 zu einem kurzfristigen Rückgang der Motordrehzahl 27, 30, sofern der Antriebsmotor 14 in einem sogenannten Teillastbereich 31 betrieben wird, der im wesentlichen durch einen niedrigen, das abgreifbare Antriebsmoment bestimmenden Kraftstoffverbrauch 32 und einen niedrigen, die Motorleistung definierenden Motorladeluftdruck 33 charakterisiert wird. In der den Volllastbereich 34 definierenden Beschleunigungsphase des Antriebsmotors 14 nehmen sowohl der Kraftstoffbedarf 32 als auch der Motorladeluftdruck 33 sprunghaft zu. Beim Umschalten des Antriebsmotors 14 vom Teillastbereich 31 in den Volllastbereich 34 muss der Antriebsmotor 14 zunächst die Arbeitsorgane 20 in den jeweiligen Nenndrehzahlbereich beschleunigen. Tritt in dieser Beschleunigungsphase 34 zudem ein hoher Durchsatz 29 an den Arbeitsorganen 20 auf, fällt die Motordrehzahl 27, 30 ab. Beim Einfahren in den Erntegutbestand wird das, aufgrund der Belastung der Arbeitsorgane 20 durch das zugeführte Erntegut 4, von dem Antriebsmotor 14 aufzubringende Antriebsmoment von der Motorsteuerung 21 über die absinkende Drehzahl 27 des Antriebsmotors 14 sensiert und eine Leistungserhöhung veranlasst. Da die Motorsteuerung 21 jedoch eine gewisse Trägheit, bedingt durch den erst allmählich zunehmenden Motorladeluftdruck 33, aufweist, und der Unterschied zwischen dem Leistungsbedarf beim bloßen Fahren ohne Erntegutdurchsatz 4 und dem plötzlich auftretenden Leistungsbedarf beim Einfahren in den Erntegutbestand sehr groß ist, besteht das zuvor bereits beschriebene Problem, dass der Antriebsmotor 14 abgewürgt wird. Dem Abwürgen des Antriebsmotors 14 konnte vom Betreiber 26 der landwirtschaftlichen Arbeitsmaschine 2 bisher lediglich durch die Reduzierung der Fahrgeschwindigkeit begegnet werden.

Erfindungsgemäß wird die Beschleunigung der Arbeitsorgane 20 an die Sensierung des die landwirtschaftliche Arbeitsmaschine 2 durchlaufenden Erntegutdurchsatzes 4 gekoppelt. Aus diesem Grund sind dem Feldhäcksler 1 an sich bekannte Sensoren 35 zur Sensierung des Erntegutdurchsatzes 4 zugeordnet, die über Datenübertragungsleitungen 36 mit der Steuereinrichtung 23 verbunden sind. Die an sich bekannten und hier nicht näher beschriebenen Sensoren 35 können beispielsweise als an der Fahrzeugkabine 25 angeordneter Lasersensor 37 zur Sensierung des Erntegutbestandes 4 vor dem Feldhäcksler 1 ausgebildet sein, welche das Erntegut 4 bereits vor dem Einzug erkennen und diese Information an die Steuereinrichtung 23 übermitteln, so dass hinreichend Zeit zur Regelung der Antriebsmotordrehzahl 27 verbleibt. Die Sensoren 35 können aber auch als unmittelbar an dem Vorsatzgerät 3 angeordnete Tastsensoren 38 ausgebildet sein, die das eingezogene Erntegut 4 ebenfalls zu einem frühen Zeitpunkt erkennt und wiederum ein frühes Erntegutsignal an die Steuereinrichtung 23 übermitteln. Ferner können die Sensoren 35 als Bewegungssensor 39 ausgebildet sein, die beispielsweise an einer schwenkbeweglich gelagerten oberen Einzugs- und Vorpresswalze 40 der Förder- und Vorpresswalzen 5 angeordnet sind, die über die Auslenkung dieser Einzugs- und Vorpresswalze 40 ein den Erntegutdurchsatz 4 repräsentierendes Signal generieren. Zudem liegt es im Rahmen der Erfindung an verschiedenen Arbeitsorganen 20 in an sich bekannter Weise Drehmomentverläufe zu sensieren, die letztlich auch ein erntegutdurchsatzadäquates Signal generieren. Entscheidend ist nur, dass die Generierung der durchsatzabhängigen Signale in einem Bereich 41 erfolgt, der hinreichend weit vor dem Arbeitsorgan 6, 20 liegt, welches durch seinen enormen Leistungsbedarf für seine Beschleunigung und der Bearbeitung des Erntegutstromes 4 zu einem Absinken der Drehzahl 27 des Antriebsmotors 14 führen könnte, sofern der Antriebsmotor 14 noch im Teillastbereich 31 arbeitet. In Fällen, in denen die Sensoren 35 das Erntegut 4 weit vor dem Auftreffen des Erntegutes 4 auf die Arbeitsorgane 20, 6 mit dem höchsten Energiebedarf sensieren, wie dies etwa beim Einsatz des beschriebenen Lasersensors 37 der Fall ist, muss das ermittelte Durchsatzsignal und die hierauf basierende Regelung des Antriebsmotors 14 durch die Steuereinrichtung 23 an die Fahrgeschwindigkeit der landwirtschaftlichen Arbeitsmaschine 2 gekoppelt sein. Damit wird sichergestellt, dass sich der Antriebsmotor 14 auch dann noch in einer Beschleunigungsphase befindet, wenn der sensierte Erntegutdurchsatz 29 in das Arbeitsorgan 20, 6 mit dem größten Energiebedarf gelangt.

Sensieren die durchsatzermittelnden Sensoren 35 kein Erntegut 4 wird die Motordrehzahl 27 des im Teillastbereich 31 arbeitenden Antriebsmotors 14 mittels der Steuereinrichtung 23 beispielsweise um 100 U/min abgesenkt. Generieren die besagten Sensoren 35 ein frühes Durchsatzsignal 4 überführt die Steuereinrichtung 23 den Antriebsmotor 14 in einen den Volllastbereich 34 repräsentierenden Betriebszustand "Beschleunigung", in dem zunächst die Arbeitsorgane 20 auf Nenndrehzahl beschleunigt werden, wobei zugleich der Motorladeluftdruck 33 steigt, sodass ein nachfolgend sprunghaft ansteigender Leistungsbedarf wegen des die Häckseltrommel 6 passierenden Gutstromes 4 nicht mehr zwangsläufig ein Absinken der Motordrehzahl 27 hervorruft. Der Fahrer des Feldhäckslers 1 kann somit mit unveränderter Fahrtgeschwindigkeit die Erntefahrt fortsetzen. Erfindungsgemäß ist die Steuereinrichtung 23 so strukturiert, dass die Variation der Motordrehzahl 27 des Antriebsmotors 14 auf einen definierten Drehzahlbereich beschränkt und dieser Drehzahlbereich einstellbar ist. Aus diese Weise kann der Betreiber 26 des Feldhäckslers 1 die für die jeweilige Erntefahrt optimale Leistung des Antriebsmotors 14 abrufen.

Die Regelung der Motordrehzahl 27 kann aber auch von Parametern vorgegeben werden. Diese Parameter können die Drehzahl des Antriebsmotors 14 selbst, die Fahrtgeschwindigkeit des Feldhäckslers 1, die Erntegutart, die Erntegutmenge, die Schnittlänge des Ernteguts 4, die Schichtdicke des Ernteguts 4 und/oder die Erntegutfeuchte sein. Sämtliche Parameter beeinflussen die Motordrehzahl 27. So haben die Erntegutart, die Erntegutmenge, die Schnittlänge, die Schichtdicke oder die Erntegutfeuchte unmittelbare Auswirkung auf die Belastung der Arbeitsorgane 20. Dass heißt, je mehr Erntegut 4 aufgenommen wird, desto größer ist die Schichtdicke und desto mehr Leistung muss von dem Antriebsmotor 14 den Arbeitsorganen 20 zur Förderung und Zerkleinerung des Erntegutes 4 zur Verfügung gestellt werden, was sich wiederum drehzahlbeeinflussend auf den Antriebsmotor 14 auswirkt. Werden diese Parameter zu Beginn oder während der Erntefahrt eingestellt, kann die Drehzahlsenkung und die Drehzahlerhöhung genau an die spezifischen Feld- und Erntebedingungen voreingestellt beziehungsweise angepasst werden. Zudem wird auf diese Weise sichergestellt, dass die Beschleunigungsphasen des Antriebsmotors 14 so optimiert werden können, dass jeweils die möglichst niedrigste Beschleunigung gewählt wird, sodass der Kraftstoffverbrauch und der lastabhängige Verschleiß des Antriebsmotors gering bleiben.

Um den Betreiber 26 der landwirtschaftlichen Arbeitsmaschine 2 zu entlasten erfolgt die Regelung der Motordrehzahl 27 vorzugsweise selbsttätig. Die Steuereinrichtung 23 ist dann jedoch so strukturiert, dass der Betreiber 26 auch eine manuelle Änderung der Motordrehzahl 27 vornehmen und so auf sich plötzlich ändernde Bedingungen reagieren kann.

Es liegt im Rahmen des Könnens eines Fachmanns die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: Feldhäcksler
- 2: landwirtschaftliche Arbeitsmaschine
- 3: Vorsatzgerät
- 4: Erntegut
- 5: Einzugs- und Vorpresswalzen
- 6: Häckseltrommel
- 7: Gegenschneide
- 8: Nachzerkleinerungseinrichtung
- 9: Förderschacht
- 10: Nachbeschleuniger
- 11: Auswurfkrümmer
- 12: Auswurfkrümmerklappe
- 13: Antriebsriemen
- 14: Antriebsmotor
- 15: Riemenscheibe
- 16: Riemenscheibe
- 17: Riemenscheibe
- 18: Spanneinrichtung
- 19: Spannrolle
- 20: Arbeitsorgan
- 21: Motorsteuerung
- 22: Datenübertragungssystem
- 23: Steuereinrichtung
- 24: Fahrzeugkabine
- 25: Eingabe- und Anzeigeeinheit
- 26: Betreiber
- 27: Motordrehzahl
- 28: Motorkennlinien

- 29: Erntegutdurchsatzkennlinie
- 30: Motordrehzahlkennlinie
- 31: Teillastbereich
- 32: Kraftstoffkennlinie
- 33: Motorladeluftdruckkennlinie
- 34: Volllastbereich
- 35: Sensor
- 36: Datenübertragungsleitung
- 37: Lasersensor
- 38: Tastsensor
- 39: Bewegungssensor
- 40: Einzugs- und Vorpresswalze
- 41: früher Bereich

## Patentansprüche

1. Landwirtschaftliche Arbeitsmaschine (1, 2) mit einem Antriebsmotor (14) und einem von diesem Antriebsmotor (14) angetriebenen System von Arbeitsorganen (20), welches zumindest ein Vorsatzgerät (3) und ein oder mehrere Arbeitsaggregate (3, 5, 6, 8, 10) zur Bearbeitung von Erntegut (4) umfasst sowie einer dem Antriebsmotor (14) zugeordneten Steuereinrichtung (23) zur Regulierung der Drehzahl des Antriebsmotors (14),
**dadurch gekennzeichnet, dass**
die Steuereinrichtung (23) den Antriebsmotor (14) dann in einem Betriebszustand "Beschleunigung" betreibt, wenn in dem von dem Antriebsmotor (14) angetriebenen System von Arbeitsorganen (20) ein Erntegutdurchsatz (4, 29) ermittelt wird und wobei der Betriebszustand "Beschleunigung" noch anhält, wenn ein sensierter hoher Erntegutdurchsatz (29) in das Arbeitsorgan (20, 6) mit dem größten Energiebedarf gelangt.

2. Landwirtschaftliche Arbeitsmaschine (1, 2) nach Anspruch 1,
**dadurch gekennzeichnet,**
**dass** der Betriebszustand "Beschleunigung" des Antriebsmotors (14) den Volllastbetrieb (34) des Antriebsmotors (14) definiert und das Beschleunigen des Antriebsmotors (14) von einer Ist-Motordrehzahl zu einer Maximal-Motordrehzahl umfasst.

3. Landwirtschaftliche Arbeitsmaschine (1, 2) nach einem der vorhergehenden Ansprüche,
**dadurch gekennzeichnet,**
**dass** die Steuereinrichtung (23) eine Drehzahlerhöhung des Antriebsmotors (14) in einem definierten Drehzahlbereich herbeiführt.

4. Landwirtschaftliche Arbeitsmaschine (1, 2) nach Anspruch 2,
**dadurch gekennzeichnet,**
**dass** das Betreiben des Antriebsmotors (14) bei Ist-Motordrehzahl den Teillastbetrieb (31) des Antriebsmotors (14) definiert.

5. Landwirtschaftliche Arbeitsmaschine (1, 2) nach einem der vorhergehenden Ansprüche,
**dadurch gekennzeichnet,**
**dass** das Betreiben des Antriebsmotors (14) bei Ist-Motordrehzahl durch die Steuereinrichtung (23) dann bewirkt wird, wenn in dem von dem Antriebsmotor (14) angetriebenen System von Arbeitsorganen (20) kein Erntegutdurchsatz (4) ermittelt wird.

6. Landwirtschaftliche Arbeitsmaschine (1, 2) nach einem der vorhergehenden Ansprüche,
**dadurch gekennzeichnet,**
**dass** der Erntegutdurchsatz (4) in dem System von Arbeitsorganen (20) in einem vorderen, die von dem Erntegutdurchsatz (4) zunächst kontaktierten Arbeitsorgane (3, 5, 20) umfassenden Bereich (41) ermittelt wird.

7. Landwirtschaftliche Arbeitsmaschine (1, 2) nach einem der vorhergehenden Ansprüche,
**dadurch gekennzeichnet, dass**
der Erntegutdurchsatz (4) mittels Sensoren (35, 37-39) ermittelt wird.

8. Landwirtschaftliche Arbeitsmaschine (1, 2) nach einem der vorhergehenden Ansprüche,
**dadurch gekennzeichnet, dass**
die Sensoren (35) am Vorsatzgerät (3) und/oder an der landwirtschaftlichen Arbeitsmaschine (1, 2) und/oder an den Arbeitsaggregaten (5, 6, 8, 10) angeordnet sind.

9. Landwirtschaftliche Arbeitsmaschine (1, 2) nach einem der vorhergehenden Ansprüche,
**dadurch gekennzeichnet, dass**
die Steuereinrichtung (23) die Motordrehzahl (27) außerhalb des Erntegutbestandes reduziert und die Motordrehzahl (27) beim Hineinfahren in den Erntegutbestandes erhöht.

10. Landwirtschaftliche Arbeitsmaschine (1, 2) nach Anspruch 9,
**dadurch gekennzeichnet, dass**
die Erhöhung der Motordrehzahl (27) mit der Reduzierung der Motordrehzahl (27) übereinstimmt.

11. Landwirtschaftliche Arbeitsmaschine (1, 2) nach einem der vorhergehenden Ansprüche,
**dadurch gekennzeichnet, dass**
die Drehzahlbereiche der Erhöhung und der Reduzierung der Motordrehzahl (27) des Antriebsmotors (14) einstellbar sind.

12. Landwirtschaftliche Arbeitsmaschine (1, 2) nach einem der vorhergehenden Ansprüche,
**dadurch gekennzeichnet, dass**
die Drehzahlsenkung und die Drehzahlerhöhung des Antriebsmotors (14) in Abhängigkeit von Parametern vorgebbar ist.

13. Landwirtschaftliche Arbeitsmaschine (1, 2) nach Anspruch 12,
**dadurch gekennzeichnet, dass**
die Parameter für die Vorgabe der Drehzahlsenkung und/oder der Drehzahlerhöhung des Antriebsmotors (14) die Motordrehzahl (27) selbst, die Fahrgeschwindigkeit, die Erntegutart, die Erntegutmenge, die Schnittlänge des Ernteguts (4), die Schichtdicke des Ernteguts (4) und/oder die Erntegutfeuchte sind.

14. Landwirtschaftliche Arbeitsmaschine (1, 2) nach einem der vorhergehenden Ansprüche,
**dadurch gekennzeichnet, dass**
die Drehzahlsenkung und die Drehzahlerhöhung des Antriebsmotors (14) selbsttätig oder manuell erfolgt.

15. Landwirtschaftliche Arbeitsmaschine (1, 2) nach einem der vorhergehenden Ansprüche,
**dadurch gekennzeichnet, dass**
die Motordrehzahl (27) außerhalb des Erntegutbestandes um mindestens 100 U/min reduziert wird.

## Claims

1. An agricultural working machine (1, 2) comprising a drive engine (14) and a system of working members (20), which is driven by said drive engine (14) and which includes at least one front-mounted implement (3) and one or more working assemblies (3, 5, 6, 8, 10) for dealing with crop material (4), and a control device (23) associated with the drive engine (14) for regulating the rotary speed of the drive engine (14),
**characterised in that**
the control device (23) operates the drive engine (14) in its "acceleration" operating mode when a crop material throughput (4, 29) is ascertained in the system of working members (20), which is driven by the drive engine (14), and wherein the "acceleration" operating mode still persists when a sensed high crop material throughput (29) passes into the working member (20, 6) with the greatest energy demand.

2. An agricultural working machine (1, 2) according to claim 1 **characterised in that** the "acceleration" operating mode of the drive engine (14) defines full-load operation (34) of the drive engine (14) and includes acceleration of the drive engine (14) from an actual engine rotary speed to a maximum engine rotary speed.

3. An agricultural working machine (1, 2) according to one of the preceding claims **characterised in that** the control device (23) produces an increase in rotary speed of the drive engine (14) in a defined rotary speed range.

4. An agricultural working machine (1, 2) according to claim 2 **characterised in that** operation of the drive engine (14) at the actual engine rotary speed defines the part-load mode of operation (31) of the drive engine (14).

5. An agricultural working machine (1, 2) according to one of the preceding claims **characterised in that** operation of the drive engine (14) at the actual engine rotary speed is implemented by the control device (23) when no crop material throughput (4) is ascertained in the system of working members (20), which is driven by the drive engine (14).

6. An agricultural working machine (1, 2) according to one of the preceding claims **characterised in that** the crop material throughput (4) is determined in the system of working members (20) in a front region (41) which includes the working members (3, 5, 20) which are firstly contacted by the crop material throughput (4).

7. An agricultural working machine (1, 2) according to one of the preceding claims **characterised in that** the crop material throughput (4) is ascertained by means of sensors (35, 37-39).

8. An agricultural working machine (1, 2) according to one of the preceding claims **characterised in that** the sensors (35) are arranged at the front-mounted implement (3) and/or at the agricultural working machine (1, 2) and/or at the working assemblies (5, 6, 8, 10).

9. An agricultural working machine (1, 2) according to one of the preceding claims **characterised in that** the control device (23) reduces the engine rotary speed (27) outside the crop material stand and increases the engine rotary speed (27) when moving into the crop material stand.

10. An agricultural working machine (1, 2) according to claim 9 **characterised in that** the increase in the engine rotary speed (27) matches the reduction in the engine rotary speed (27).

11. An agricultural working machine (1, 2) according to one of the preceding claims **characterised in that** the rotary speed ranges in the increase and reduction in the engine rotary speed (27) of the drive engine (14) are adjustable.

12. An agricultural working machine (1, 2) according to one of the preceding claims **characterised in that** the reduction in rotary speed and the increase in rotary speed of the drive engine (14) is predeterminable in dependence on parameters.

13. An agricultural working machine (1, 2) according to claim 12 **characterised in that** the parameters for predetermining the reduction in rotary speed and/or the increase in rotary speed of the drive engine (14) are the engine rotary speed (27) itself, the speed of travel, the kind of crop material, the amount of crop material, the cut length of the crop material (4), the thickness of the layer of crop material (4) and the crop material moisture content.

14. An agricultural working machine (1, 2) according to one of the preceding claims **characterised in that** the reduction in rotary speed and the increase in rotary speed of the drive engine (14) is effected automatically or manually.

15. An agricultural working machine (1, 2) according to one of the preceding claims **characterised in that** the engine rotary speed (27) is reduced by at least 100 rpm outside the crop material stand.

## Revendications

1. Machine agricole de travail (1, 2) comprenant un moteur d'entraînement (14) et un système d'organes de travail (20) qui est entraîné par ce moteur d'entraînement (14) et qui comprend au moins un outil frontal (3) et un ou plusieurs équipements de travail (3, 5, 6, 8, 10) pour traiter un produit de récolte (4), ainsi qu'un dispositif de commande (23) associé au moteur d'entraînement (14) pour réguler la vitesse de rotation du moteur d'entraînement (14), **caractérisée en ce que** le dispositif de commande (23) fait fonctionner le moteur d'entraînement (14) dans un état de fonctionnement « accélération » quand un débit de produit de récolte (4, 29) est détecté dans le système d'organes de travail (20) entraîné par le moteur d'entraînement (14), l'état de fonctionnement « accélération » durant encore quand un débit de produit de récolte (29) élevé détecté parvient dans l'organe de travail (20, 6) ayant le besoin en énergie le plus élevé.

2. Machine agricole de travail (1, 2) selon la revendication 1, **caractérisée en ce que** l'état de fonctionnement « accélération » du moteur d'entraînement (14) définit le fonctionnement à pleine charge (34) du moteur d'entraînement (14) et comprend l'accélération du moteur d'entraînement (14) d'une vitesse de rotation de moteur réelle à une vitesse de rotation de moteur maximale.

3. Machine agricole de travail (1, 2) selon l'une des revendications précédentes, **caractérisée en ce que** le dispositif de commande (23) provoque une élévation de la vitesse de rotation du moteur d'entraînement (14) dans une plage de vitesse de rotation définie.

4. Machine agricole de travail (1, 2) selon la revendication 2, **caractérisée en ce que** le fonctionnement du moteur d'entraînement (14) à la vitesse de rotation de moteur réelle définit le fonctionnement à charge partielle (31) du moteur d'entraînement (14).

5. Machine agricole de travail (1, 2) selon l'une des revendications précédentes, **caractérisée en ce que** le dispositif de commande (23) impose au moteur d'entraînement (14) un fonctionnement à la vitesse de rotation de moteur réelle quand aucun débit de produit de récolte (4) n'est détecté dans le système d'organes de travail (20) entraîné par le moteur d'entraînement (14).

6. Machine agricole de travail (1, 2) selon l'une des revendications précédentes, **caractérisée en ce que** le débit de produit de récolte (4) dans le système d'organes de travail (20) est déterminé dans une zone avant (41) comprenant les organes de travail (3, 5, 30) qui entrent en contact en premier avec le débit de produit de récolte (4).

7. Machine agricole de travail (1, 2) selon l'une des revendications précédentes, **caractérisée en ce que** le débit de produit de récolte (4) est détecté au moyen de capteurs (35, 37-39).

8. Machine agricole de travail (1, 2) selon l'une des revendications précédentes, **caractérisée en ce que** les capteurs (35) sont disposés sur l'outil frontal (3) et/ou sur la machine agricole de travail (1, 2) et/ou sur les équipements de travail (5, 6, 8, 10).

9. Machine agricole de travail (1, 2) selon l'une des revendications précédentes, **caractérisée en ce que** le dispositif de commande (23) réduit la vitesse de rotation de moteur (27) à l'extérieur de la récolte sur pied et élève la vitesse de rotation de moteur (27) lors de l'entrée dans la récolte sur pied.

10. Machine agricole de travail (1, 2) selon la revendication 9, **caractérisée en ce que** l'élévation de la vitesse de rotation de moteur (27) concorde avec la réduction de la vitesse de rotation de moteur (27).

11. Machine agricole de travail (1, 2) selon l'une des revendications précédentes, **caractérisée en ce que** les plages de vitesse de rotation de l'élévation et de la réduction de la vitesse de rotation de moteur (27) sont réglables.

12. Machine agricole de travail (1, 2) selon l'une des revendications précédentes, **caractérisée en ce que** la réduction de vitesse de rotation et l'élévation de vitesse de rotation du moteur d'entraînement (14) sont prescriptibles en fonction de paramètres.

13. Machine agricole de travail (1, 2) selon la revendication 12, **caractérisée en ce que** les paramètres pour prescrire la réduction de vitesse de rotation et/ou l'élévation de vitesse de rotation du moteur d'entraînement (14) sont la vitesse de rotation de moteur (27) proprement dite, la vitesse de marche, la nature du produit de récolte, la quantité de produit de récolte, la longueur de coupe du produit de récolte (4), l'épaisseur de couche du produit de récolte (4) et/ou l'humidité du produit de récolte.

14. Machine agricole de travail (1, 2) selon l'une des revendications précédentes, **caractérisée en ce que** la réduction de vitesse de rotation et l'élévation de vitesse de rotation du moteur d'entraînement (14) ont lieu automatiquement ou manuellement.

15. Machine agricole de travail (1, 2) selon l'une des revendications précédentes, **caractérisée en ce que** la vitesse de rotation de moteur (27) à l'extérieur de la récolte sur pied est réduite d'au moins 100 tr/min.
